# EUROPEAN PATENT APPLICATION

(11) **EP 4 043 232 A1**
(43) Date of publication of application: **17.08.2022**
(21) Application number: 22155666.5
(22) Date of filing: 08.02.2022
(51) Int. Cl.: B44C 5/04, B44F 1/06

(54) **A PLATE AND MANUFACTURING METHOD THEREOF**

(30) Priority: 10.02.2021 TW 110105192
(71) Applicant: PrintGoal Technology Co., Ltd., New Taipei City 220 (TW)
(72) Inventor: CHEN, Ying-Chieh, 104 Taipei City (TW)
(74) Representative: Wittmann, Günther

(57) **Abstract**

The present invention discloses a plate. The plate comprises a first material layer, a substrate, a coloring layer, and a second material layer. The coloring layer is formed on the first material layer via the substrate, and the second material layer is formed on the coloring layer. The above-mentioned layers are integrated into a one-piece structure.

## Description

### FIELD OF THE INVENTION

The present invention relates to a plate and manufacturing method thereof, and more particularly to a substrate having a pattern and manufacturing method thereof.

### BACKGROUND

In order to satisfy the demand of consumers regarding appearances and decorations, the current decorations take artistic glass as an example. The prior arts as laminated glass or PVB glass are to laminate patterns between different glass layers. After the annealing treatment, it is capable of forming a composite structure with layers.

Nevertheless, a method of stacking layers is employed to achieve an intended visual effect, because the aforementioned composite structure is unable to form homogeneous material restricting by production processes or substrate material characteristics in a manufacturing process. However, the lamination production process cannot apply to seamless product design. In other words, distinctive layers can be clearly identified in current artistic glass from the appearance per se. The described distinctive layers may be glass-pattern/graph-glass structure. This structure forms fragile structure and unfashionable design. Also, weight of double glass layers causes difficulties during transportation or installation.

Moreover, due to the importance, consideration and needs of the decorations of restaurants, workplaces and even escalator interior walls, the needs of the artistic glass decoration undoubtedly increase. Therefore, the current artistic glass decoration with the aforementioned defects cannot be easily improved by a simple manufacturing process, and further make people fail to distinguish the distinctive layer structure per se. The aesthetics and practicality of the artistic glass decoration are greatly reduced.

### SUMMARY

In order to solve the problems mentioned in the background, the present invention provides a plate. The plate comprises a decorative layer which includes a first material layer, at least one substrate, at least one coloring layer and a second material layer. The at least one coloring layer forms on the at least one of side of the first material layer via the at least one substrate, and the second material layer forms on the at least one coloring layer. The at least one substrate contains at least one adhesive layer, and the at least one coloring layer contains metal powder. The at least one adhesive layer is used for adhering the metal powder over the first material layer, and the decorative layer further encompasses a one-piece structure.

In accordance with some embodiments of the disclosed invention, an manufacturing method of the plate is provided. The manufacturing method comprises: apply a first material layer; forming at least one substrate on the first material layer via coating at least one adhesive layer with a predetermined pattern. Form at least one coloring layer which comprises metal powder on the at least one substrate. Form a second material layer on the at least one coloring layer. Form a decorative layer via using a curing method to cure the second material layer, and process the decorative layer via a surface treatment to form a one-piece structure so that the decorative layer is encompassed by the one-piece structure.

The above summary of the present disclosure is to provide a basic description of the various aspects and features of the present disclosure. It is not a detailed description. Its purpose is not to specifically recite keys or critical elements of the present disclosure, and it is not intended to limit the scope of the present disclosure. It merely presents a few concepts of the present disclosure in a concise manner.

### BRIEF DESCRIPTION OF THE DRAWINGS

FIG 1 is a schematic diagram depicting a plate in accordance with an embodiment of the present invention.
FIG 2 is another schematic diagram depicting a plate in accordance with an embodiment of the present invention.
FIG 3 is a flowchart illustrating a plate and manufacturing method thereof in accordance with an embodiment of the present invention.

### DETAILED DESCRIPTION OF THE INVENTION

To clarify the purpose, technical solutions, and the advantages of the disclosure, embodiments of the present disclosure will now be described more fully hereinafter with reference to the accompanying drawings.

The present invention relates to a plate and manufacturing method thereof, and more particularly to a plate having a pattern and manufacturing method thereof.

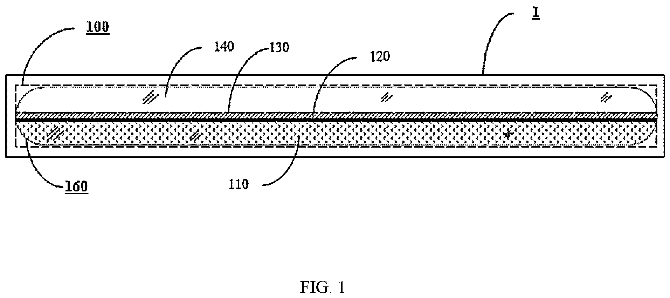

Please see FIG. 1. FIG. 1 a schematic diagram depicting a plate and manufacturing method thereof in accordance with an embodiment of the present disclosure. In this embodiment, plate 1 comprises an integral decorative layer 100, which comprises a first material layer 110, a plate 120, a coloring layer 130, and a second material layer 140. The coloring layer 130 is formed on the first material layer 110 via the substrate 120. The second material layer 140 is alternatively formed on the coloring layer 130, or formed on the coloring layer 130 and the first material layer 11 simultaneously. Furthermore, in order to the surface treatment which is treated on outer surface of the decorative layer 100, a one-piece structure 160 is formed. Therefore the a one-piece structure 160 presents a characteristic that the human eyes cannot identify the heterogeneous material structure of the decorative layer 100.

Thereafter, for the detailed description as follows and as shown in FIG. 1. It assumes that the substrate 120, the coloring layer 130 and the second material layer 140 are disposed on the first material layer 110. In addition to the former embodiment, the present invention may alternatively disposes the substrate 120, the coloring layer 130 and the second material layer 140 on and under the first material layer 110simultaneously as practical needs.

Furthermore, the substrate 120 of the present embodiment further includes adhesive layer, and the coloring layer 130 includes metal powder. In the present embodiment, the adhesive layer included by the substrate 120 may bind heterogeneous materials therebetween. Preferably, materials of the adhesive layer can be selected as different light transmissions according to the requirements of visual effects to present different visual effects of the substrate 120. The present invention is not limited thereto. In this way, the selected adhesive layer which is contained by the substrate 120 may avoid the unnecessary distinctive-layered appearance of plate 1 in sight, and the coloring layer 130 may further shade a partial or whole area of the substrate 120, therefore to emphasize the color effects of coloring layer 130.

Moreover, in the implementable embodiments, the adhesive layer may also contain curing agent or crosslinking agent with different mixing proportions, which can be adjusted according to material characteristics of the metal powder. The metal powder contained by the coloring layer 130 of the present embodiment comprises at least a metal simple substance, a metal oxide, an alloy or a mixture which is mainly selected from Cu (copper), Ag (silver), Pd (mercury), Au (gold), Al (aluminum), Ni (nickel), Pt (platinum), Sn (tin) and In (indium).

Therefore, the embodiment of the invention can create visual effects such as plating metal or plating metal pattern on the glass via adhering the metal powder of the coloring layer 130 to the adhesive layer of substrate 120. In order to consider the variety of manufacturing methods and materials can be used for forming the coloring layer 130, the plate 1 may visually present a detailed stereoscopic structure with exuberant details. Thus, the plate 1 is possible to present favorable decorative and aesthetic properties.

In the present embodiment, the material of the first material layer 110 is at least selected from the group consisting of sapphire, glass (SiO₂), quartz, ceramic, epoxy resin, acrylate, polyimide, polymethylmethacrylate (PMMA), polyethylene terephthalate (PET), polycarbonate (PC), polydimethylsilicon (PDMS), zinc oxide, aluminum nitride (AlN) and silicon carbide (SiC) thereof.

Comparing with the first material layer 110, the material of the second material layer 140 of the present embodiment is preferably selected from a liquid photo-curable resin or a liquid heat-curable resin. Additionally, the material of the second material layer 140 can be further selected from the photo-curable resin, the heat-curable resin or both of them due to the actual requirements of manufacturing process or visual effect.

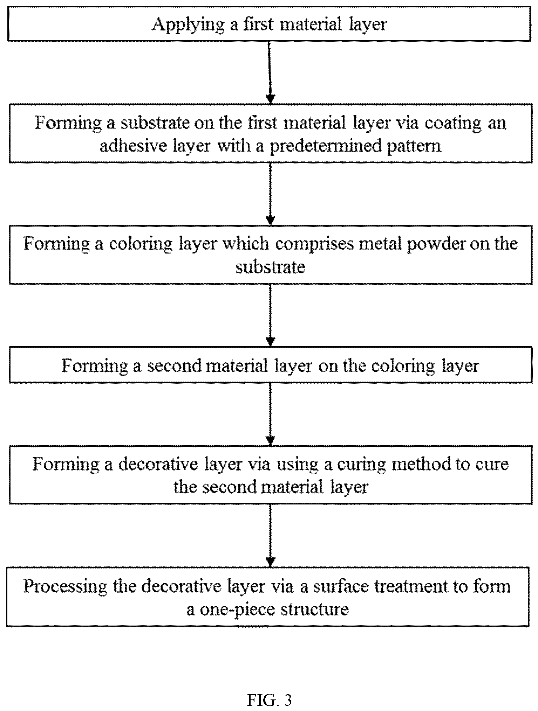

Please refer to FIG. 1, FIG. 2 and FIG. 3. FIG. 3 is a flowchart illustrating a plate and manufacturing method thereof in accordance with an embodiment of the present disclosure.

As shown in FIG. 3, the FIG. 3 representatively shows the manufacturing process which manufactures the decorative layer 100 of the plate 1 step by step. In order to achieve this purpose, the first material layer 110 is initially formed. In this embodiment, the first material layer 110 may be glass which consists of SiO₂, In₂O₃ or both.

As described in the steps of FIG. 3, the invention firstly provides at least one first material layer 110, then forming a predetermined pattern by using CAM/ CAD and outputting the predetermined pattern to a processing machine to form a substrate 120 with the predetermined patter on at least one surface of the first material layer 110. Hereinafter, coupling method between the substrate 120 and the first material layer 110 is not limited for this embodiment, but assumes to use digital printing or stencil printing to form the substrate 120 which includes the adhesive layer in predetermined pattern on the first material layer 110. In addition, adhering of substrate 120 can also be achieved by mask spray coating or scalping knife flat printing with a mask having the predetermined pattern. It should be noted that the aforementioned predetermined pattern can be any hollow pattern or texture to form the respective substrate 120.

In addition, as shown in FIG. 3, after the end of the aforementioned steps, the metal powder using to form a coloring layer 130 is coated or printed on the first material 110, the substrate 120 or both. In this case, the metal powder will adhere to the surface of the first material layer 110 via adhesion of the substrate 120 to form the coloring layer 130 with a pattern. Herein, the pattern is defined by the predetermined pattern of the aforementioned step. For example, the predetermined pattern is previously inputted an inkjet printer. The metal powder can be adhering fixed on the substrate 120 to form the coloring layer 130 with the pattern via adhesion of the substrate 120.

In some embodiments, according to actual needs, the aforementioned pattern may be formed on the substrate 120. For example, the pattern may be formed directly with multi-color distribution by using spray-coating or inkjet printing the metal powder and may additionally be formed with uniform-coloring or color-layer-stacked structure by using spray-coating or inkjet printing via another mask. In this case, users can use spray-coating or printing freely to directly form a substrate 120 or a coloring layer 130 with a pattern on the first material layer 110, on the other hand, the pattern of the substrate 120 or the coloring layer 130 further can be formed by using spray-coating or inkjet printing via at least one mask.

In some embodiments, the aforementioned metal powder may be substituted to ceramic compounds, luminescent materials (e.g., quantum-dot materials), or color powder materials or colorless powder materials with special visual effects, based on requirements of visual effects of the decorative layer 100. In this regard, any methods can be used to dispose the metal powder on the first material 110, the substrate 120 or both, such as spray treatment or inkjet printing treatment, depending on properties and composition of adhesive layer of the substrate 120 and the metal powder.

At last, as shown in FIG. 3, the second material layer 140 is deposited on a surface of the first material layer 110 to concurrently cover or embed the first material layer 110, the substrate 120 and the coloring layer 130. In this case, a material of the second material layer 140 can be compound or composition contains photo-curable resin, the heat-curable resin or both, and preferably containing PMMA or its mixtures, for the purpose of having a visually degree of transparency effects or shading effects.

In practical implementation of the aforementioned steps, the second material layer 140 is deposed on the surface of the first material layer 110 when spray-coating or roll-coating, and then using a curing method to cure it. Furthermore, a mold can optionally be used for curing a shape of the second material layer 140, depending on actual manufacturing conditions. In this regard, any method can be used to cure the second material layer 140 over the surface of the first material layer 110. In one example, the second material layer 140 may be cured by irradiating with UV light if the material of it containing photo-curable resin, and may be cured by heating with infrared radiation if the material of it containing heat-curable resin. In another example, the second material layer 140 may be cured by alternatively using the aforementioned methods if the material of the second material layer 140 containing both of photo-curable resin and heat-curable resin.

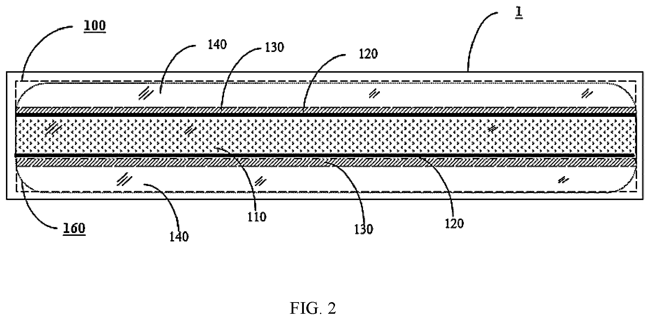

Further, a plate 1 shown in FIG. 2 can be formed by the above-described methods. Specially, a decorative layer 100 exhibits better visual effects by sequentially stacking the substrate 120, the coloring layer 130 and the second material layer 140 on another surface of the first material layer 110 which is untreated.

In some embodiments, the first material layer 110 and the second material layer 140 may further alter their material characteristics by mixing with optical material or magnetic material to achieve glowing or magnetic attraction effects, where the optical material may be a quantum dot material, a noctilucent material or a fluorescent material etc., and the magnetic material may be a hard magnetic material or a soft magnetic material etc.

As shown in FIG.2 and FIG. 3, after the end of the aforementioned steps, the decorative layer 100 constructed by the cured second material layer 140 with the first material layer 110, the substrate 120 and the coloring layer 130. Next, using a surface treatment method for processing the decorative layer 100 to form the plate 1 which is encased in a one-piece structure 160. Hereinafter, the term "surface treatment method" may refer to polishing, sandblasting, matte treatment, forging, spray coating, scalping knife coating or combinations thereof, and the polishing can further be sandpaper polishing, slurry polishing or combinations thereof.

In this embodiment, the surface treatment method is primality provided for processing surfaces and peripheries of the first material layer 110 and the second material layer 140 to a visual uniform effect, thereby forming the one-piece structure 160. For example, an appearance of the second material layer 140 can be processed to have uniformity visual effects according to the first material layer 110 and vice versa.

In some embodiments, the first material layer 110 and the second material layer 140 can be processed into another uniform appearance which different from both layers (110 and 140). Normally, if the surfaces and the peripheries of the first material layer 110 and the second material layer 140 need to be processed as the one-piece structure 160 (visible by eye), it is possible to take optical parameters as references to process, e.g., texture, pattern, surface roughness (Ra) or surface roughness (Rz).

In some embodiments, the surface treatment method for the decorative layer 100 is accomplished by applying mechanical processing, in so doing, an appearance of the plate 1 may experience a more uniform performances of the one-piece structure 160. Of course, it is possible to further process the appearance of the plate 1 according to other surface treatment methods depending on requirements of different visual effects (e.g., matte surface, semi-matte surface, with multiple reliefs, or forged surface).

For example, a finally formed surface of the second material layer 140 which may be uneven if thicknesses and heights of the first material layer 110 and the coloring layer 130 are irregular on the premise of the second material layer 140 consists of Polyurethane, Lacquer or Epoxy, and hence influencing the appearance of the plate 1. In this case, the surface treatment may be selected to polish and flatten the second material layer 140 to conform surface characteristics of the first material layer 110, and it exerts a positive effect on forming an ideal one-piece structure 160.

In addition, it is noted that processing steps shown in FIG. 3 is capable to perform repeatedly, in particular a pattern formed by the substrate 120 and at least one coloring layer 130 can be presented in a multilayer stack via inkjet printing, so the appearance of the plate 1 having the richer visual effects is presented. The aforementioned step may be performed before second material layer 140 deposits on first material layer 110 and coloring layer 130 and thus can obtain the decorative layer 100 having 2-dimensional patterns or 3-dimensional patterns.

The above description is merely the embodiments in the present disclosure; the claim is not limited to the description thereby. The equivalent structure or changing of the process of the content of the description and the figures, or to implement to other technical field directly or indirectly should be included in the claim. All other embodiments obtained by a person of ordinary skill in the art based on the embodiments of the present disclosure without creative efforts shall fall within the protection scope of the present disclosure.

## Claims

1. A plate, comprising a decorative layer;
wherein the decorative layer comprises:
a first material layer;
at least one substrate, formed on at least one of side of the first material layer, wherein the at least one substrate contains at least one adhesive layer;
at least one coloring layer, formed on the at least one of side of the first material layer via the at least one substrate, wherein the at least one coloring layer contains metal powder; and
a second material layer, formed on the at least one coloring layer;
wherein the decorative layer further encompasses a one-piece structure.

2. The plate according to claim 1, the metal powder is selected from a group consisting of Cu, Ag, Pd, Au, Al, Ni, Pt, Sn, In, oxide compounds and combinations thereof.

3. The plate according to claim 1, the first material layer comprises a glass which is composed of SiO₂, In₂O₃ or combinations thereof.

4. The plate according to claim 1, second material layer is photo-curing resin or thermosetting resin.

5. A plate manufacturing method, comprising:
applying a first material layer;
forming at least one substrate on the first material layer via coating at least one adhesive layer with a predetermined pattern;
forming at least one coloring layer which comprises metal powder on the at least one substrate;
forming a second material layer on the at least one coloring layer;
forming a decorative layer via using a curing method to cure the second material layer; and processing the decorative layer via a surface treatment to form a one-piece structure;
wherein the decorative layer is encompassed by the one-piece structure.

6. The plate manufacturing method according to claim 5, wherein the curing method includes photo-curing, thermal curing or combinations thereof.

7. The plate manufacturing method according to claim 5, wherein the surface treatment includes polishing, sandblasting, matte, forged, spray coating, flow coating, scalping knife coating or combinations thereof.

8. The plate manufacturing method according to claim 5, wherein the at least one substrate is further formed on the first material layer via using a mask.

9. The plate manufacturing method according to claim 5, wherein the at least one coloring layer is further formed on the at least one substrate via using another mask.

10. The plate manufacturing method according to claim 8, wherein the first mask is designed to fit the predetermined pattern.

11. The plate manufacturing method according to claim 9, wherein the second mask is designed to fit the predetermined pattern.
